# EUROPEAN PATENT APPLICATION

(11) **EP 1 059 551 A2**
(43) Date of publication of application: **13.12.2000**
(21) Application number: 00201896.8
(22) Date of filing: 29.05.2000
(51) Int. Cl.: G02B 26/12, G02B 27/00

(54) **Apparatus for correcting scan line skew in an optical scanner**

(30) Priority: 10.06.1999 US 329763
(71) Applicant: EASTMAN KODAK COMPANY, Rochester, New York 14650 (US)
(72) Inventor: Blanding, Douglas Lane, c/o Eastman Kodak Company, Rochester, New York 14650-2201 (US)
(74) Representative: Lewandowsky, Klaus, Dipl.-Ing.

(57) **Abstract**

An optical assembly comprising: a source of a beam of light; a scanner which scans the beam of light along a line scan of light; a cylinder mirror which has a cylindrical axis and which projects the scan line of light to an image plane; a fixed support; and first and second crossed flexures which mount the cylinder mirror to the fixed support for rotation about a rotational axis which is perpendicular to the cylindrical axis, the crossed flexures having respective central regions which coincide with the rotational axis.

## Description

The invention relates generally to the field of manufacturing lenticular images and more particularly to apparatus for correcting the relative skew of a writing laser beam to lenticular material which is used for producing the lenticular image. More specifically, the invention relates to apparatus for correcting, in a scanning laser printer, the skew between the writing laser beam and the lenticules of the lenticular material.

Lenticular images include an array of cylindrical lenses in a lenticular material and a sequence of spatially multiplexed images that are viewed through the lenticular material so that different ones of the multiplexed images are viewed at different angles by the viewer. One image effect produced by the lenticular image is a depth or stereoscopic image where the lenticules are oriented vertically and one eye views one image of a stereo pair or sequence from one angle and the other eye views another image from the stereo pair. Another image effect is a motion image where different images in a motion image sequence are viewed by both eyes, while changing the angle at which the image is viewed. In this image effect the lenticules are oriented in the horizontal direction and the lenticular material is rotated about the long axis of the lenticules. Other effects that combine these two effects, or form collages of unrelated images that can be viewed from different viewing angles can be provided.

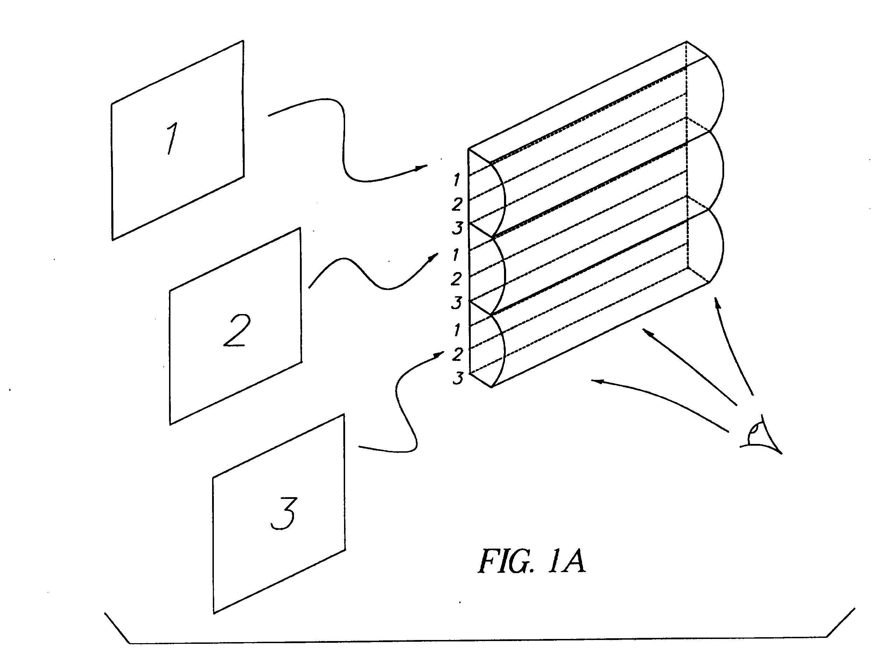

Figure 1A illustrates a motion image lenticular image which is made by combining two or more images on a lenticular medium. The surface of the medium has cylindrical lenticules, the images are interleaved and placed on the rear surface of the medium. One line from each image is placed under each lenticule. Behind each lenticule, there are three lines. The topmost line is from image 1, the center line is from image 2, and the lowermost line is from image 3. When the medium is viewed from the front at an appropriate viewing distance and is viewed along the surface normal, the viewer is able to see only the center lines under each lenticule, the viewer is unable to see the adjacent lines which belong to images 1 and 3. Each lenticule acts like a magnifier and causes the center line to appear as large as the entire lenticule. Thus, the viewer sees only image 2.

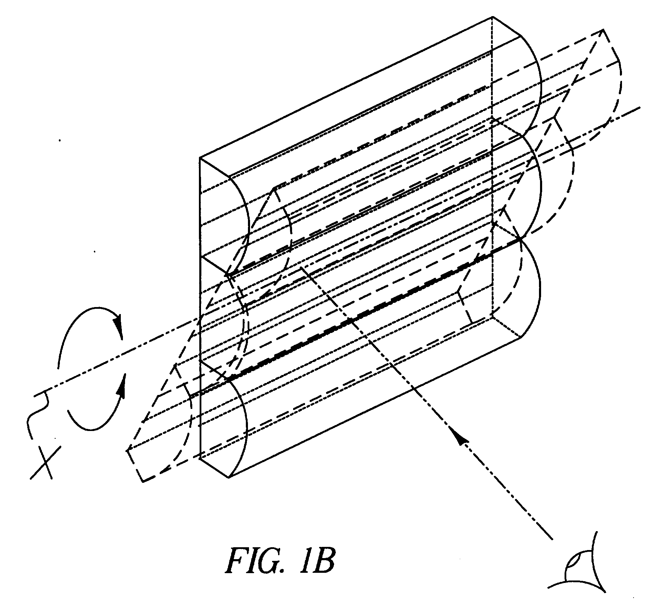

Now, if the viewer tilts the medium by rotating it about the X axis, as shown in Fig. 1B, the viewer will see only image 1 (not 2 or 3) when the medium is in the position shown in solid lines. The viewer will see only image 3 (not 1 or 2) when the medium is in the position shown in dashed lines. Thus the viewer is able to see the images in sequence simply by rotating the medium about the X-axis. If the images are, in fact, a series of images from a motion scene, then the viewer will see a simulation of that motion. For this example, three images were combined. In fact, it is possible to combine many more images in this manner.

It has been proposed to create stereoscopic images by providing a lenticular material having a color photographic emulsion thereon. The stereoscopic images are exposed onto the lenticular material by a laser scanner and the material is processed to produce the lenticular image product. See for example, U.S. Patent No. 5,697,006 issued December 9, 1997 to Taguchi et al..

The image that is exposed on the lenticular material must be very precisely positioned under each lenticule. If the separate image lines produced by the writing laser beam of the laser scanner and the lenticules on the material are not aligned parallel, the resulting skew misalignment will degrade the image quality. There is a need therefore for an improved manufacturing process for making lenticular image products from lenticular material of the type having a lenticular lens array coated with photographic emulsion.

It is known to scan a non actinic laser beam across a lenticular array in a direction perpendicular to the axes of the lenticules, and to sense the deflection of the beam by the lenticules to produce an output clock for modulating a writing laser beam. See U.S. Patent No. 5,681,676, issued October 28, 1997 to Telfer et al.

It is an object of this invention to provide a apparatus for correcting any variation of lenticular skew relative to the writing laser beam for the purpose of printing accurate images on lenticular imaging material.

The present invention is directed to overcoming one or more of the problems set forth above.

According to a feature of the present invention there is provided an optical assembly comprising: a source of a beam of light; a scanner which scans the beam of light along a line scan of light; a cylinder mirror which has a cylindrical axis and which projects the scan line of light to an image plane; a fixed support; and first and second crossed flexures which mount the cylinder mirror to the fixed support for rotation about a rotational axis which is perpendicular to the cylindrical axis, the crossed flexures having respective central regions which coincide with the rotational axis.

These and other aspects, objects, features, and advantages of the present invention will be more clearly understood and appreciated from a review of the following detailed description of the preferred embodiments and appended claims, and by reference to the accompanying drawings.

The invention provides an accurate method for correcting skew variations between a writing laser beam and lenticules of a lenticular product in a laser printer, thereby enabling efficient production of high quality lenticular image products using lenticular material having photographic emulsion coated thereon.
Figs. 1A and 1B are diagrammatic views useful in understanding the present invention.
Fig. 2 is a schematic diagram of an apparatus employed to produce lenticular image products according to the present invention.
Fig. 3 is a schematic diagram illustrating the effect of the lenticular medium on the second beam of light.
Fig. 4 shows details of the functionality of a position sensing detector 44.
Fig. 5 shows the skew misalignment of the writing laser beam 22 and second beam 38 with respect to the lenticules and the refracted second beam 33 as it impinges onto detectors 44 and 44a.
Fig. 6 shows three sets of output signals 48 and 48a and the resulting relative phase position between them that occurs for different amounts of skew misalignment between second beam 38 and the long axis center 100 of the lenticule lens onto which it is directed.
Fig. 7 is a schematic diagram illustrating the apparatus for processing the output signals 48 and 48a to generate a correction signal for controlling the position of the pivoting cylinder mirror.
Fig. 8 is a schematic diagram illustrating, in further detail, the apparatus for processing the output signals 48 and 48a to generate a correction signal for controlling the position of the pivoting cylinder mirror.
Fig. 9 is a schematic diagram illustrating, an alternate embodiment of the present invention with variations on the method of supporting the lenticule material.
Fig. 10 is a perspective view of an embodiment of the present invention.

To facilitate understanding, identical reference numerals have been used, where possible, to designate identical elements that are common to the figures.

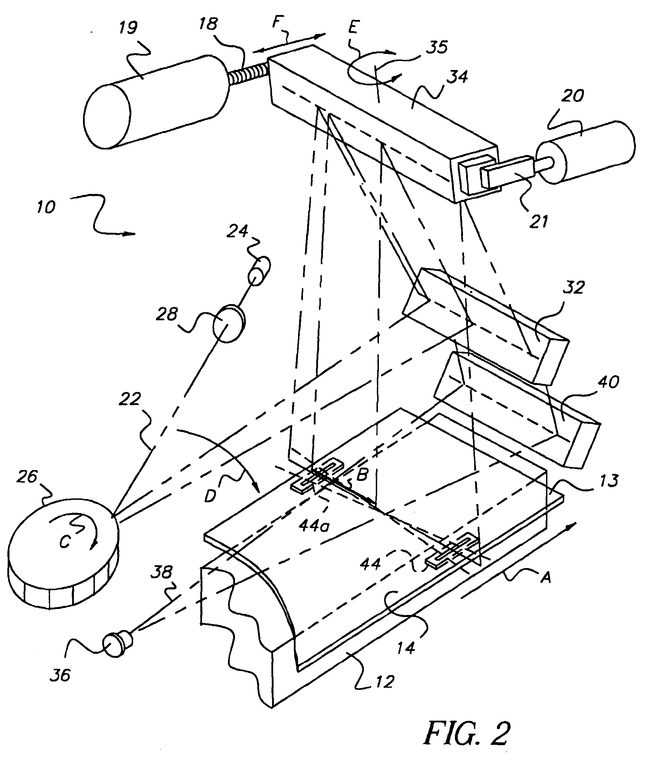

Referring to Fig. 2, lenticular image product production apparatus 10 includes a platen 12 for supporting lenticular material 14. Lenticular material 14 is placed with the lenticules down on the top of platen 12 so that the emulsion side of the lenticular material 14 faces up. Further, the lenticular material 14 is made to overhang the platen 12 on both sides allowing fixed detectors 44 and 44a to be placed under the overhung edges of lenticular material 14. A suitable mounting structure (not shown) that fixedly mounts detectors 44 and 44a while transport platen 12 and lenticular material 14 move is provided to hold detectors 44 and 44a under the area where lenticular material 14 is exposed.

The lenticular material 14 is transported by platen 12 in the direction of arrow A by a linear transport system that is suitably driven, typically by a motor system (not shown) such as a direct drive linear motor or leadscrew. These drive systems are well understood and known in the art. The lenticular material 14 is exposed with a writing laser beam 22 from a modulated laser 24. The writing laser beam 22 is focused onto a scanning polygon 26 by optics 28. The scanning polygon 26 rotates in direction C causing the reflected writing laser beam 22 to scan in the D direction. The writing laser beam 22 is reflected from a cold mirror (reflects visible light and transmits infra red light) 32 onto pivoting cylinder mirror 34. Pivoting cylinder mirror 34 focuses the writing laser beam 22 onto the surface 13 of the lenticular material 14 thereby exposing the color photographic emulsion.

An infrared laser 36, located at a distance from the surface of the material identical to the distance to the scanning face of the polygon 26, forms a second beam of light 38, of a wavelength that can be transmitted through and which does not expose the lenticular material 14. The second beam of light is reflected by a IR turning mirror 40 through cold mirror 32 onto pivoting cylinder mirror 34. Pivoting cylinder mirror 34 focuses the second beam 38 onto the surface 13 of the lenticular material 14 in a line or two spots narrower than the width of a lenticule. Fixed detectors 44 and 44a are sensitive to the wavelength of second beam 38 and made insensitive to writing laser beam 22 by suitable filters placed over each detector during their manufacturing process. Second beam 38 passes through lenticular material 14 and is refracted by the lenticules of lenticular material 14 and impinge on fixed detectors 44 and 44a on either side of platen 12. Thus, the position of second beam 38 is sensed by detectors 44 and 44a relative to the lenticules of lenticular material 14.

Pivoting cylinder mirror 34 is mounted so that it rotates about a pivot axis 35 in the direction arrow E at the center of the scan line of writing laser beam 22. The pivoting cylinder mirror 34 rotates both the first and second laser beams 22 and 38 about pivot axis 35 and assures that the line of second beam 38 and the scan line of writing laser beam 22 are maintained parallel. The scanning polygon 26 works in conjunction with the pivoting cylinder mirror 34 to cause the writing laser beam 22 to scan the lenticular material in the direction of arrow B, parallel to the long cylindrical axes of the lenticules of lenticular material 14. The motion of the lenticular material 14 caused by platen 12 in the direction of arrow A provides scanning in the orthogonal or page scan direction.

Further, the angular position of pivoting mirror 34 is measured by position sensor 20 whose moving member 21 is fixedly mounted to the end portion of pivoting mirror 34. This sensor may be of any suitable type of position sensor known and employed in the art such as an LVDT, capacitive probe or potentiometer. At the other end of pivoting mirror 34 is attached a means for displacing or rotating the pivoting mirror 34. In this embodiment, a D.C. motor 19 and leadscrew 18 are employed to produced a controlled displacement of the end portion of pivoting mirror 34 in the direction of arrow F, and thus an angular displacement E about pivot axis 35. It can be appreciated by those skilled in the art that any number of other suitable means may employed to produce the same displacement including but not limited to, a cam actuator, voice coil or mechanical link. Thus, by the above described means, pivoting mirror 34 can be accurately controlled to change the angle of writing laser beam 22 and second beam 38 with respect to the lenticules on lenticular material 14 and therefore minimize any skew misalignment between them.

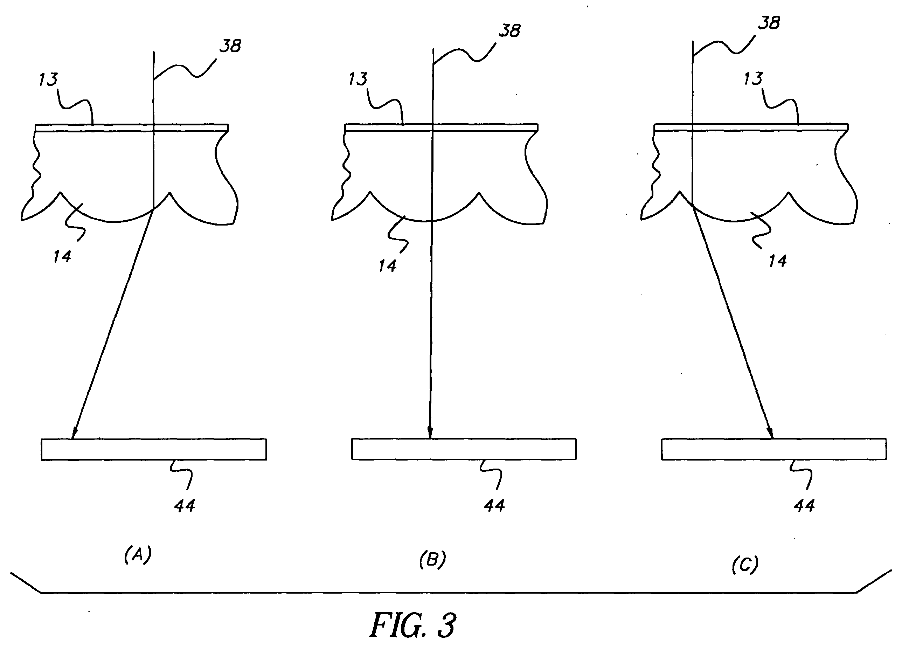

Turning now to Fig. 3, illustrating how the lenticular material deflects the beam 38 of infra red light as it passes through different portions of one of the lenticular lenses in the lenticular material 14. Beam 38 is focused onto and is transmitted through the top layer 13 composed of a color photographic emulsion. As the beam 38 first encounters a lenticule, as shown in the illustration (A) on the left of Fig. 2, it is refracted at a large angle to the left and impinges on the left side of the position sensing detector 44. The angle depends upon the position of the lenticule with respect to the beam 38. When the beam is at the center of a lenticule (B), it is minimally deflected as shown in the illustration in the center and falls on the center of the position detector 44. As the lenticular material is moved further to the right, as shown in the illustration (C) on the right, the beam is deflected to the right and impinges on the right side of the position detector 44. The position detector 44 may be, for example, a PSD S3932 position sensitive detector available from Hamamatsu Photonics KK, Hamamatsu, Japan. However, any suitable photosensor means may be employed to detect the position of beam 38, including: split cell detectors, CCD image sensors and any other photosensors capable of sensing a relative position change of a spot or line of light.

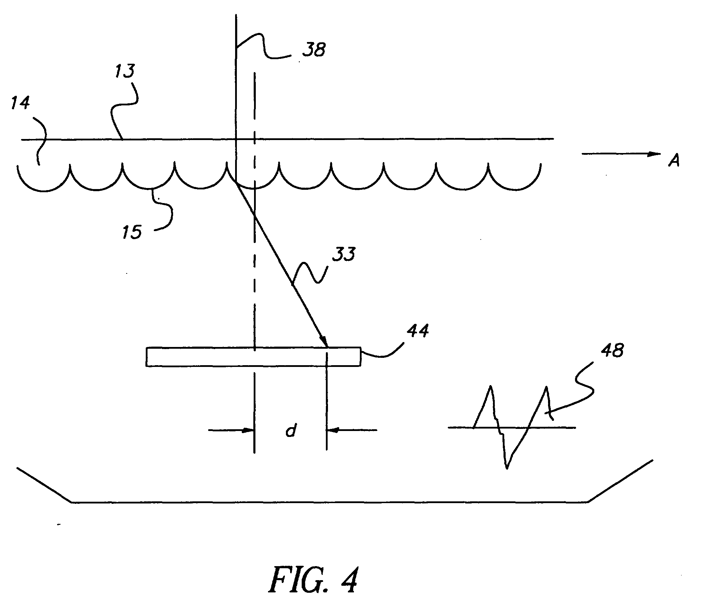

Turning now to Fig. 4 showing further details of the functionality of the position sensing detector 44. A beam of light 38 is focused onto a top layer 13 of the lenticular material 14. The lenticular material 14 is moved relative to the beam 38 by a transport mechanism (not shown) in direction A. When the beam 38 passes through the curved surface 15 of the lenticular material 14 it refracts at a large angle. The centroid of the exiting beam 33 is axially displaced from the original beam 38 by a distance d. This distance d is measured by a position sensing detector 44. As the transport mechanism moves the lenticular material 14, the distance d changes. An output signal 48 is generated as the centroid of the exiting beam 33 is axially displaced from the original beam 38 by a distance d. Waveform 48 produced by position detector 44 is shown in Fig 4.

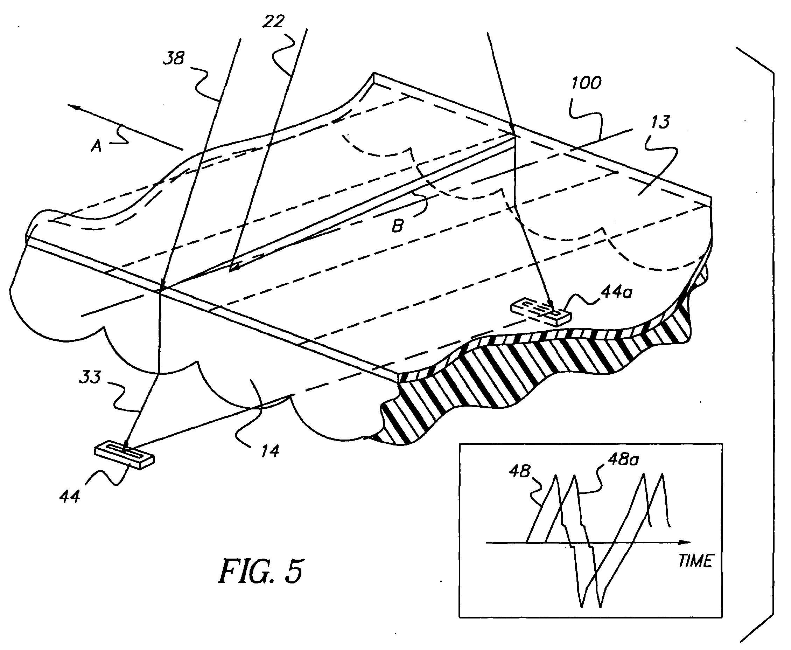

Referring now to Fig. 5, where the skew misalignment of the writing laser beam 22 and second beam 38 with respect to the lenticules is shown. Position sensing detectors 44 and 44a are shown in the correct orientation for detecting this skew misalignment. As the lenticular material 14 is transported in direction A, the second beam 38 is transmitted through the lenses of the lenticules and refracted resulting in the generation of output signals 48 and 48a by detectors 44 and 44a. Due the fact that the second beam 38 is misaligned relative to the long axis of the lenticule 100, the position of the refracted beam 33 is different at each detector, causing waveforms 48 and 48a to be positionally out of phase.

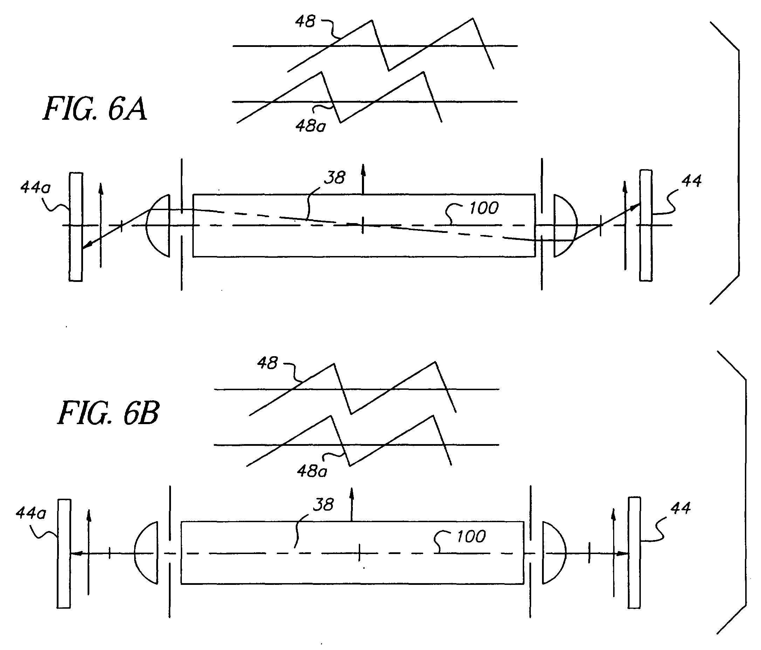

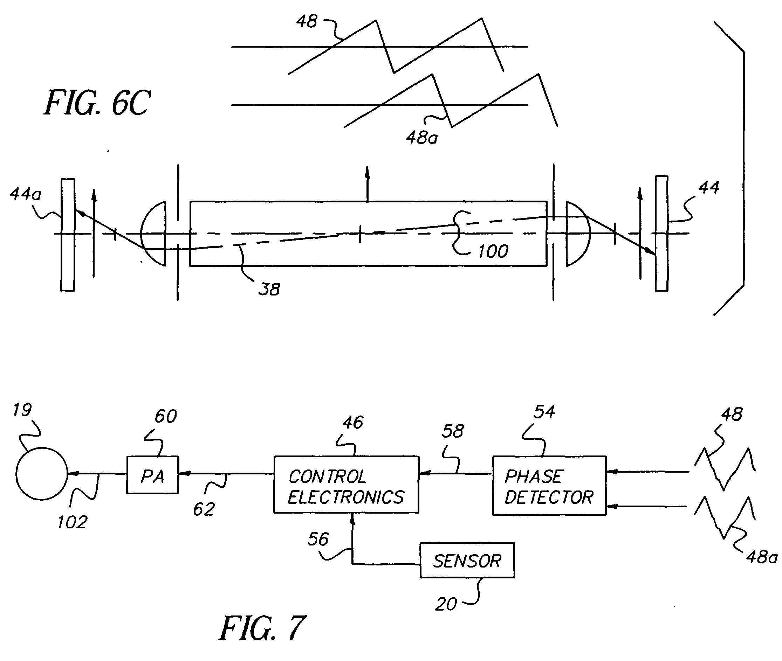

Referring now to Fig. 6 showing three sets of output signals 48 and 48a and the resulting relative phase position between them that occurs for different amounts of skew misalignment between second beam 38 and long axis 100 of the lenticule lens onto which it is directed. Fig. 6 depicts a top view of a lenticule and second beam 38 that creates the resulting output waveforms 48 and 48a from position sensing detectors 44 and 44a for three cases of skew alignment.

Fig. 6A shows a clockwise skew misalignment between the second beam 38 and the long axis 100 of the lenticule. This misalignment is measured by the relative phase shift between the output signals 48 and 48a. As shown, 48a leads 48, signifying clockwise skew misalignment between second beam 38 and long axis 100 of the lenticule lens.

Fig. 6B shows no skew misalignment between the second beam 38 and the long axis 100 of the lenticule. As shown, 48a is in phase with 48, signifying no skew misalignment between second beam 38 and long axis 100 of the lenticule lens.

Fig. 6C shows a counter-clockwise skew misalignment between the second beam 38 and the long axis 100 of the lenticule. This misalignment is measured by the relative phase shift between the output signals 48 and 48a. As shown, 48a lags 48, signifying counter-clockwise skew misalignment between second beam 38 and long axis 100 of the lenticule lens.

Thus, the system as described, is capable of generating electrical signals which represent, by their phase difference, the degree of angular skew alignment between the second beam 38 and the long axis 100 of the lenticular material 14. Initial pre-alignment of detectors 44 and 44a are required in order to assure that the generated electrical signals have the desired phase difference when second beam 38 and long axis 100 are parallel aligned. This is accomplished by removal of lenticular material 14 to ensure that second beam 38 is undeflected by the lenticules of lenticular material 14 and moving either detector relative to the other, in the direction of arrow A, to produce the desired output voltage equivalent to waveforms 48 and 48a desired phase difference.

Referring to Fig. 7, the control electronics is shown detail. Output signals 48 and 48a, from position sensing detectors 44 and 44a, are input to the phase detection means 54. Phase detection means 54 can be of any of the known phase detection means understood and known in the art. A typical method might measure the time difference between the zero crossings of waveforms 48 and 48a and convert this to a voltage using a charge pump technique. The resultant phase difference signal 58 is input to the control electronics 46. The output 58 of the phase detection means 54 represents the degree of skew between the lenticular long axis 100 and, the writing laser beam 22 and second beam 38. The control electronics generates a control signal 62 which is directed to power amplifier 60 to generate a drive signal 102 to drive the pivoting cylinder mirror motor 19. The control electronics 46 also receives a position feedback signal 56 from the pivoting cylinder mirror position sensor 20 that monitors the angular position of the pivoting cylinder mirror 34. This position feedback signal 56 is used by the control electronics 46 to enhance the stability of the servo system.

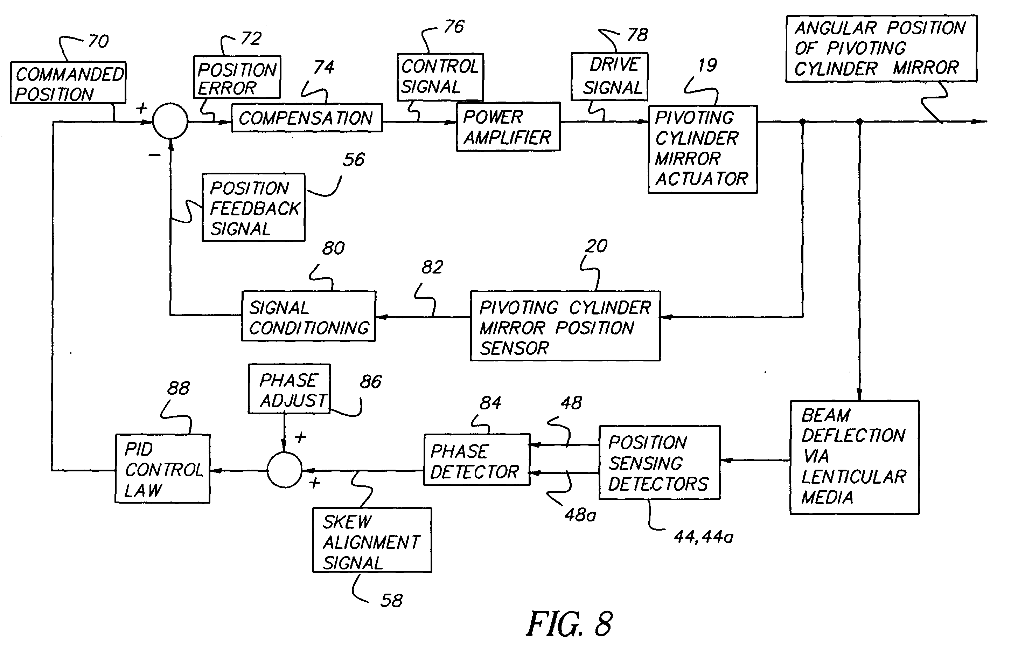

Referring to Fig. 8, the control electronics is shown in further detail as a control system block diagram. The control system is a dual loop system. The inner loop seeks to track the commanded position 70. The commanded position 70 is summed with the position feedback signal 56 to generate the position error signal 72. This position error signal is acted upon by compensation electronics 74 to generate a control signal 76. This control signal 76 is directed to the power amplifier 60 which creates the pivoting cylinder mirror drive signal 78. The pivoting cylinder mirror drive signal causes the pivoting cylinder mirror actuator (pivoting cylinder mirror actuator includes pivoting cylinder mirror 34, pivoting cylinder mirror motor 19, leadscrew 18, pivoting cylinder mirror position sensor 20 and moving member 21) to rotate, thus changing the angular position of the pivoting cylinder mirror 34. The angular position, of the pivoting cylinder mirror 34, is sensed by the pivoting cylinder mirror position sensor 20. The output 82 of the pivoting cylinder mirror position sensor 20 is filtered and gain adjusted in the signal conditioning block 80 to produce the position feedback signal 56. The outer loop provides the commanded position 70. The commanded position 70 is generated by the deflection of beam 38 through the lenticular material 14. The misalignment between the second beam 38 and the long axis 100 of the lenticule is detected by the position sensing detectors 44 and 44a and is represented by the relative phase shift between the output signals 48 and 48a. The relative phase difference signal 58 between the output signal 48 and 48a, is discriminated by the phase detector 84. The relative phase is summed with the phase adjust input 86 and applied to PID control law electronics 88. The use of PID control laws in system control is well known in the art. The output of this electronics is the commanded position 70. The phase adjust signal 86 can be added as an additional offset to the phase difference 58 in order to introduce a known constant skew offset to compensate for the raster skew of the writing laser beam 22.

In an alternate embodiment, the platen 12 may be constructed entirely of glass (not shown) or some other transparent material such that the lenticular material 14 can be fully supported and the beam 38 can pass through the transparent material and impinge upon detectors 44 and 44a.

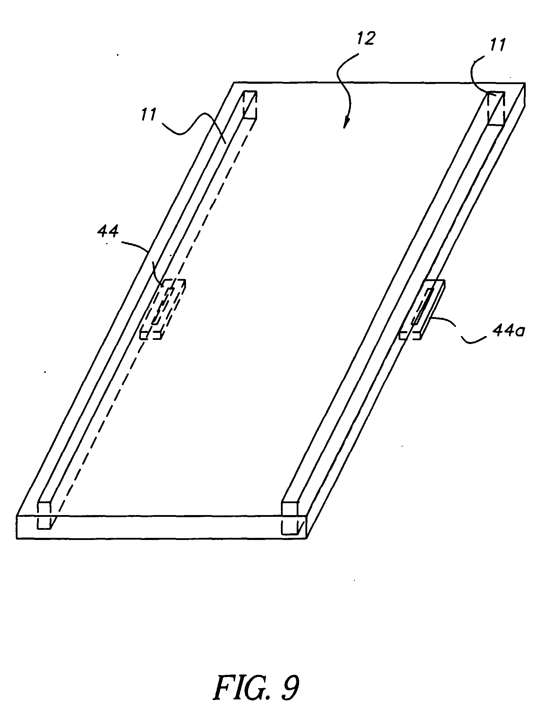

Referring to Fig. 9, a further alternate embodiment the platen 12 may be constructed of a material other than glass but also include narrow transparent inserts 11 along the full length of the lenticular material 14. The transparent inserts 11 need only be sufficiently wide so that the beam can pass through to the detectors 44 and 44a. The transparent inserts 11, if used must be positioned so that the fixed detectors 44 and 44a will receive the deflected beam 38.

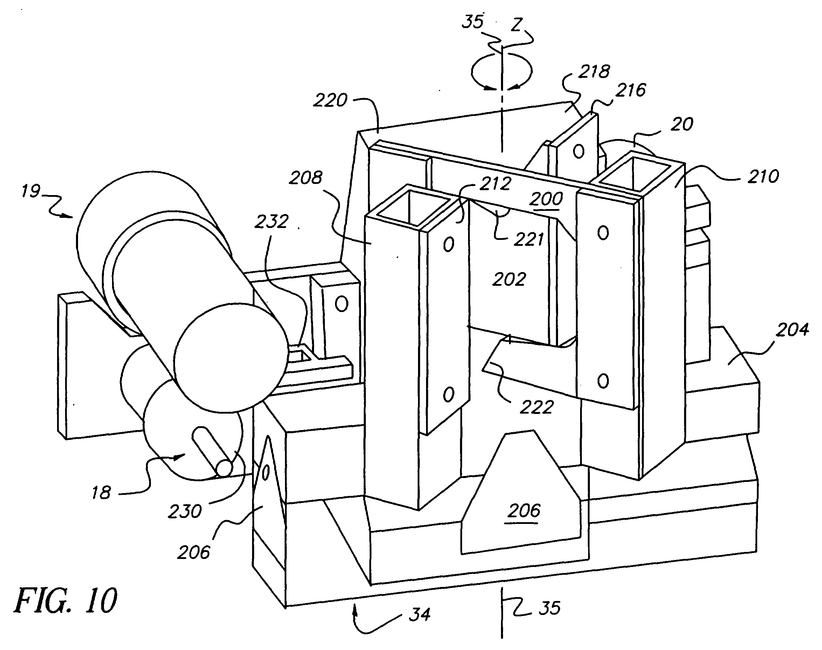

Referring now to Fig. 10, there is shown an embodiment of the present invention. As shown, cylinder mirror 34 is mounted for rotation about Z axis 35 by means of crossed flexures 200 and 202. Mirror 34 is mounted on crosswise member 204 by means of supports 206. Upright members 208 and 210 are mounted on crosswise member 204. Free end 212 of flexure 202 is affixed to upright member 208 and free end 214 of flexure 200 is affixed to upright member 210. The other end 216 of flexure 202 is affixed to stationary support 218 and the other end 220 of flexure 200 is also affixed to stationary support 218. Stationary support 218 also mounts motor 19 and lead screw 18, as well as sensor 20 with moving member 21 (See: Fig. 1). Lead screw 18 mates with a threaded segment 230 of member 232 mounted on member 204.

Flexures 200 and 202 are generally rectangular in shape and are formed of thin flexible material, such as metallic or polymeric material. Flexure 200 has a rectangular opening 221 through which flexure 202 passes. Flexure 202 has V-shaped cutouts 222 which are dimensioned to fit within opening 220 at their apexes. Axis 35 passes through the central regions of flexures 200 and 202. When motor 19 causes lead screw 18 to move cylinder mirror 34, flexures 200 and 202 will flex about axis 35. It will be understood that flexures 200 and 202 can have complementary configurations which accomplish the same functionality as the configurations shown in Fig. 10.

## Claims

1. An optical assembly comprising:
a source of a beam of light;
a scanner which scans said beam of light along a line scan of light;
a cylinder mirror which has a cylindrical axis and which projects said scan line of light to an image plane;
a fixed support; and
first and second crossed flexures which mount said cylinder mirror to said fixed support for rotation about a rotational axis which is perpendicular to said cylindrical axis, said crossed flexures having respective central regions which coincide with said rotational axis.

2. The optical assembly of claim 1 wherein said source of a beam of light is a laser.

3. The optical assembly of claim 2 wherein said laser is a laser diode.

4. The optical assembly of claim 1 wherein said scanner is a rotatable multifaceted polygon mirror.

5. The optical assembly of claim 1 wherein said first and second crossed flexures are generally rectangular in shape and are configured such that one flexure passes through said other flexure.

6. The optical assembly of claim 5 wherein said first flexure has an opening and wherein said second flexure is dimensioned to pass through said opening.

7. The optical assembly of claim 1 including a control linked to said cylinder mirror for rotating said cylinder mirror about said rotational axis.

8. The optical assembly of claim 7 wherein said control includes a sensor assembly which determines whether said line of light is aligned with or skewed relative to a reference axis in said image plane.

9. The optical assembly of claim 8 wherein said control includes a motor drive for rotating said cylinder mirror so that said line of light projected by said cylinder mirror is brought into alignment with said reference axis when said sensor assembly determines that said line of light is skewed relative to said reference axis.

10. Apparatus for forming a lenticular image product from a lenticular material having an array of cylindrical lenses and a photographic emulsion coated thereon, comprising:
a scanner which scans the lenticular material with an intensity modulated first beam of light in a direction parallel to the long axes of the cylindrical lenses to form a latent lenticular image in the photographic emulsion;
a reference optical system which focuses a second beam of light having a wavelength outside of the range of sensitivity of the photographic emulsion into one or more spots or a line both with a width smaller than the pitch of the cylindrical lenses onto the lenticular material;
a cylinder mirror which is common to said scanner and said reference optical system and which has a cylindrical axis;
a support for pivotally supporting said cylinder mirror for rotation about a rotational axis which is perpendicular to said cylindrical axis, said support including crossed flexures having central regions which coincide with said rotational axis;
a mechanism which moves the lenticular material in a direction nearly perpendicular to the axes of the cylindrical lenses to provide a page scan motion of the lenticular material and to modulate the angle of reflection or refraction of the second beam of light; and
a control which includes a sensor which senses the position of the angularly modulated second beam of light to control the motion of the pivotable cylinder mirror to modify the angular relationship between the first and second beams of light and the longitudinal axes of the cylindrical lenses of the lenticular material.
